Europäisches Patentamt

European Patent Office

Office européen des brevets

(19)

(11) Veröffentlichungsnummer : **0 179 234**
**B1**

(12)        # EUROPÄISCHE PATENTSCHRIFT

(45) Veröffentlichungstag der Patentschrift :
23.11.89

(21) Anmeldenummer : 85110938.9

(22) Anmeldetag : 30.08.85

(51) Int. Cl.⁴ : $C\ 02\ F\ 11/04$, $C\ 02\ F\ 11/18$

(54) Verfahren und Vorrichtung zum Behandeln von Klärschlamm.

(30) Priorität : 22.10.84 CH 5051/84

(43) Veröffentlichungstag der Anmeldung :
30.04.86 Patentblatt 86/18

(45) Bekanntmachung des Hinweises auf die Patenterteilung : 23.11.89 Patentblatt 89/47

(84) Benannte Vertragsstaaten :
AT BE CH DE FR GB IT LI LU NL SE

(56) Entgegenhaltungen :
DE—C— 630 242
US—A— 4 246 099
KORRESPONDENZ ABWASSER, Jahrgang 30, Nr. 6,
1983, Seiten 406-414, GFA, St. Augustin, DE; A.
PERWANGER: "Technische Neuentwicklungen
landwirtschaftlicher Biogasanlagen"

(73) Patentinhaber : UTB Umwelttechnik Buchs AG
Rheinstrasse 14b
CH-9470 Buchs/SG (CH)

(72) Erfinder : Zwiefelhofer, Hans Peter
Platte 138
FL-9488 Schellenberg (LI)
Erfinder : Jungbauer, Othmar
Austrasse 88
A-6805 Feldkirch/Gisingen (AT)

(74) Vertreter : Riederer, Conrad A., Dr.
Bahnhofstrasse 10
CH-7310 Bad Ragaz (CH)

EP 0 179 234 B1

## Beschreibung

Verfahren zum Behandeln von Klärschlamm, bei welchem Verfahren der frische Klärschlamm mit Faulschlamm vorgewärmt, durch Temperaturerhöhung in einem Reaktor hygienisiert und/oder hydroyisiert und in einer oder mehreren Stufen in Faulschlamm umgewandelt wird, wobei dann der Faulschlamm bei der Vorwärmung des frischen Klärschlamms abgekühlt wird.

In der Praxis hat sich ein Behandlungsverfahren für Klärschlamm bewährt, bei welchem zuerst der Klärschlamm durch Erwärmen auf eine Temperatur von > °C während zirka 24 Stunden hygienisiert und hydrolysiert wird, worauf dann der so vorbehandelte Klärschlamm abgekühlt und in einer oder mehreren Stufen in Faulschlamm umgewandelt wird. Energetisch besonders vorteilhaft ist die biologische Erwärmung des Klärschlamms. So sieht beispielsweise das europäische Patent 0 053 777 vor, dass zur biologischen Erwärmung auf etwa 70 °C Sauerstoff in Form von Luft oder von mit Luftsauerstoff versehenem Gas in die in einem Belüftungsbehälter befindlichen Abfallstoffe eingebracht wird, wobei dann eine erhöhte Temperatur solange aufrecht erhalten wird, dass Enterobakteriazeen und Wurmeier abgetötet werden. Es wird aber nicht nur eine Hygienisierung sondern auch eine Hydrolyse des Klärschlamms erreicht. Dies hat den Vorteil, dass die nachfolgende Faulung beschleunigt wird.

Die zitierte europäische Patentschrift sieht vor, dass nach dem Austritt aus dem Belüftungsbehälter Wärme vom konditionierten Klärschlamm mittels eines Wärmetauschers auf den frischen Klärschlamm übertragen wird.

Bei der Hydrolysierung und Faulung des Klärschlamms werden die ihm enthaltenen organischen Bestandteile weitgehend abgebaut. Die Abbauschritte sind im wesentlichen die Folgenden :

1. Enzymatische Hydrolyse
2. Versäuerung
3. Azetogener Abbau
4. Methanogener Abbau
5. Sulfatreduktion

Diese Abbauschritte werden meist in zwei bis drei apparativen Stufen durchgeführt. Bei einem zweistufigen Verfahren erfolgt die Hygienisierung und Hydrolyse bei einer Temperatur von > 60 °C während etwa 24 Stunden und die Faulung bei einer Temperatur von 32° bis 38 °C während etwa acht Tagen.

Bei einem dreistufigen Verfahren erfolgt die Hygienisierung und Hydrolysierung bei einer Temperatur von > 60 °C, die Versäuerung bei einer Temperatur von etwa 33-39 °C und die Methanisierung bei etwa 32° bis 38 °C.

Wie bereits erwähnt, schlägt die zitierte europäische Patentschrift 0 053 777 vor, vor der Faulung dem hydrolysierten Klärschlamm Wärme zu entziehen und dem frischen Klärschlamm vor dessen Eingabe in den Belüftungsbehälter zuzuführen. Weil aber die optimale Temperatur für den Faulraum etwa 35 °C beträgt. und der hydrolysierte Schlamm mit einer Temperatur von etwa 60 °C anfällt, steht lediglich ein Wärmegefälle von etwa 25 °C zur Aufwärmung des frischen Klärschlamms zur Verfügung. Es ist somit zusätzlich Energie zur Erreichung der gewünschten Hygienisierungstemperatur von 60 °C notwendig. Diese Energie kann durch eine Heizung zugeführt oder durch biologische Selbsterwärmung erzeugt werden. Diese Energiezufuhr stellt einen Kostenfaktor dar. Auch wenn die Energie durch biologische Selbsterwärmung erzeugt wird, ist zu beachten, dass ein Abbau von organischem Material in solchem Masse notwendig werden kann, dass dadurch die Methanproduktion beim nachfolgenden anaeroben Abbau vermindert wird.

Die US-A-4 246 099 beschreibt ein Verfahren, bei dem frischer Klärschlamm in einer thermophilen Stufe mit einem mindestens 20 %, vorzugsweise 50 bis 80 % Sauerstoff enthaltendem Gas belüftet und dabei auf 45 bis 75 Grad Celsius erhitzt wird. Der Klärschlamm aus der thermophilen Stufe erfährt dann eine weitere Behandlung in einer mesophilen Stufe bei 25 bis 45 Grad Celsius. Der der thermophilen Stufe zugeführte frische Klärschlamm wird im Gegenstrom durch zwei Wärmeaustauscher geführt, wobei zuerst eine Erwärmung durch Faulschlamm und dann eine Erwärmung durch den aus der thermophilen Stufe fliessenden 45 bis 75 Grad warmen Klärschlamm erfolgt.

Das beschriebene Verfahren hat aber erhebliche Nachteile. So ist der apparative Aufwand gross, weil zwei Gegenstrom-Wärmeaustauscher notwendig sind. Soll ein genügender Wärmeaustausch stattfinden, so müssen diese Wärmeaustauscher gross dimensioniert sein. Weil ferner gleichzeitig frischer Klärschlamm in die thermophile Stufe einströmt und behandelter Klärschlamm aus der thermophilen Stufe ausströmt, besteht die Gefahr, dass der aus der thermophilen Stufe ausströmende hygienisierte Klärschlamm neu mit Enterobakteriaceen und Wurmeiern infiziert wird.

Es ist Aufgabe der vorliegenden Erfindung das eingangs erwähnte Verfahren zu verbessern. Der dazu notwendige apparative Aufwand sollte jedoch gering gehalten werden.

Gemäss der Erfindung ist das eingangs erwähnte Verfahren zum Behandeln von Klärschlamm dadurch gekennzeichnet, dass mit einem mindestens zwei Kammern aufweisenden Wärmetauscher folgende Operationen ausgeführt werden :

1. a) Frischer Klärschlamm wird in die erste Kammer eingelassen und anschliessend umgewälzt,

b) gleichzeitig wird warmer Faulschlamm in die zweite Kammer eingelassen und anschliessend umgewälzt,

2. gekühlter Faulschlamm wird aus der zweiten Kammer abgelassen, z. B. in den Faulschlammspeicher,

3. a) heisser Klärschlamm aus dem Hygienisier- und Hydrolysier-Reaktor wird in die zweite Kammer eingelassen und anschliessend umgewälzt,

b) gleichzeitig wird der Klärschlamm in der ersten Kammer weiter umgewälzt,

4. a) vorgewärmter Klärschlamm aus der ersten Kammer wird dem Hygienisier- und Hydrolysier-Reaktor zugeführt,

b) abgekühlter Klärschlamm aus der zweiten Kammer wird dem Faulraum zugeführt.

Dieses Verfahren ermöglicht die Verwendung des gleichen Wärmetauschers für eine erste Vorwärmung des Klärschlamms durch Faulschlamm und eine zweite Vorwärmung des Kärschlamms durch warmen Klärschlamm aus dem Reaktor. Gleichzeitig wird der warme Klärschlamm aus dem Reaktor auf die für die weitere Behandlung zweckmässige Temperatur abgekühlt. Eine weitere zweckmässige Ausgestaltung des Verfahrens sieht vor, dass mit einem mindestens drei Kammern aufweisenden Wärmetauscher folgende Operationen ausgeführt werden :

1. a) Frischer Klärschlamm wird in die erste Kammer eingelassen und anschliessend umgewälzt,

b) gleichzeitig wird warmer Faulschlamm in die zweite Kammer eingelassen und anschliessend umgewälzt,

2. a) die Umwälzung des erwärmten Klärschlamms wird eingestellt,

b) die Umwälzung des abgekühlten Faulschlamms geht weiter,

c) in die dritte Kammer wird ein Kühlmedium eingebracht,

3. a) weiter abgekühlter Faulschlamm wird aus der zweiten Kammer abgelassen, z. B. in den Faulschlammspeicher,

b) gleichzeitig wird aus der dritten Kammer das Kühlmedium abgelassen, oder die Zufuhr bzw. Umwälzung des Kühlmediums gestoppt,

4. a) heisser Klärschlamm aus dem Hygienisier- und Hydrolysier-Reaktor wird in die zweite Kammer eingelassen und anschliessend umgewälzt,

b) gleichzeitig wird der Klärschlamm in der ersten Kammer weiter umgewälzt,

5. a) in der ersten Kammer vorgewärmter Klärschlamm wird dem Hygienisier- und Hydrolysier-Reaktor zugeführt,

b) abgekühlter Klärschlamm aus der zweiten Kammer wird dem Faulraum zugeführt.

Diese Ausgestaltung des Verfahrens ermöglicht es, zusätzlich den Faulschlamm mit geringem Aufwand auf eine besonders zweckmässige tiefe Temperatur abzukühlen. Kühler Faulschlamm lässt sich wesentlich besser entwässern. Durch die Abkühlung wird nämlich der Fermentationsprozess weitgehend gestoppt, so dass praktisch keine Gasblasen mehr im Faulschlamm gebildet werden. Dies wiederum hat zur Folge, dass im Speicherbehälter rasch eine Setzung der im Faulschlamm enthaltenen festen Bestandteile erfolgt und eine grosse Menge Faulwasser abgezogen werden kann. Der im Speicherbehälter enthaltene Klärschlamm enthält daher viel Trockensubstanz. Die so erzielte bessere Eindickung erlaubt es, den Speicherbehälter relativ klein zu dimensionieren, was erhebliche Kostenvorteile bringt. Da der Faulschlamm wesentlich weniger voluminös ist, werden die Transportkosten für den Faulschlamm für die Verwendung in der Landwirtschaft, zur Verbrennung in einer Kehrichtverbrennungsanlage oder zur andersweitigen Beseitigung erheblich reduziert. Zweckmässigerweise wird der Faulschlamm weiter mit Wasser, z. B. mit gereinigtem Abwasser, abgekühlt. Er erhält so eine tiefe Temperatur, die eine noch bessere und schnellere Eindickung ermöglicht.

Die Erfindung betrifft auch eine Vorrichtung zur Durchführung des Verfahrens. Diese Vorrichtung ist dadurch gekennzeichnet, dass ein Wärmetauscher mit mindestens zwei Kammern vorgesehen ist, dass der Einlass der ersten Kammer einen Einlass für frischen Klärschlamm darstellt, dass der Auslass der ersten Kammer mittels eines Ventils mit dem Einlass des Reaktors verbindbar ist, dass der Einlass der zweiten Kammer über Ventile wahlweise mit dem Auslass des Faulraums oder dem Auslass des Reaktors verbindbar ist, dass der Auslass der zweiten Kammer über Ventile wahlweise mit dem Einlass des Faulraums bzw. des Faulschlammspeichers verbindbar ist, und dass eine Umwälzpumpe zum Umwälzen des frischen Klärschlamms in der ersten Kammer und eine Umwälzpumpe zum Umwälzen des Faulschlamms bzw. des Klärschlamms aus dem Reaktor in der zweiten Kammer vorgesehen ist.

Diese Vorrichtung hat den Vorteil, dass der bereits bei der eingangs beschriebenen bekannten Vorrichtung vorhandene Wärmetauscher zusätzlich die Funktion der Vorwärmung des frischen Klärschlamms mit Faulschlamm bzw. der Abkühlung des Faulschlamms durch frischen Klärschlamm übernimmt. Das erfindungsgemässe Verfahren kann somit mit einem gegenüber dem bekannten Stand der Technik äusserst geringen Aufwand realisiert werden. Zweckmässigerweise sind Umwälzpumpen zum Umpumpen des Inhalts der ersten und der zweiten Kammer vorgesehen. Durch dieses Umpumpen wird der Wärmeaustausch beschleunigt. Wenn es auch möglich wäre, verschiedene Arten von Wärmetauschern zu verwenden, so erweist sich ein Wärmetauscher als besonders vorteilhaft, bei dem die zweite Kammer die erste Kammer mindestens teilweise umschliesst. Es kann aber auch noch eine dritte Kammer vorgesehen werden, welche die zweite Kammer mindestens teilweise umschliesst, um mittels eines Kühlmediums, z. B. Wasser, den Inhalt der zweiten Kammer weiter abzukühlen. Schliesslich sieht ein Ausführungsbeispiel der Erfindung vor, dass eine Steuereinheit zur automatischen Steuerung der Ventile und Pumpen vorgesehen ist. Dies ermöglicht es, die Vorrichtung automatisch zu betreiben.

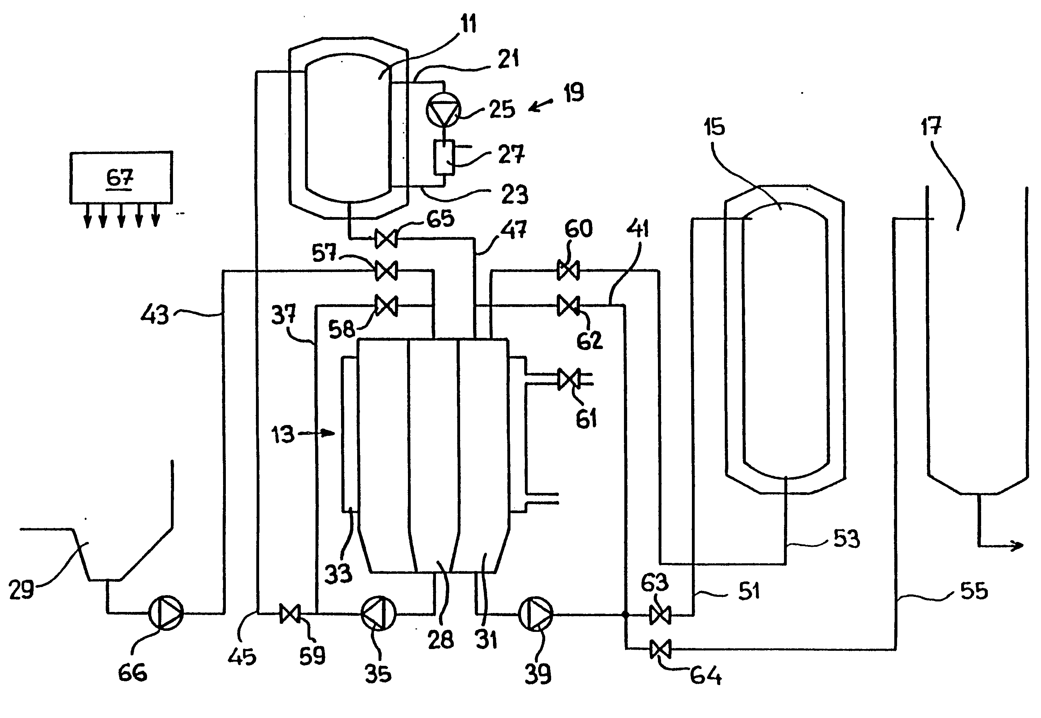

Die Erfindung wird nun unter Bezugnahme auf die Zeichnung beschrieben.

Die in der Zeichnung dargestellte Vorrichtung zum Behandeln von Klärschlamm besteht im wesentlichen aus dem Reaktor 11, dem Wärmetauscher 13 und dem Faulraum 15. Im Reaktor 11 wird der rohe Klärschlamm während etwa 24 Stunden einer thermischen Behandlung bei > 60 °C unterzogen. Nach einer Abkühlung im Wärmetauscher 13 auf etwa 32° bis 45 °C erfolgt eine Faulung im Faulraum 15, bei der Methan anfällt. Eine hohe Methanausbeute ist von grosser Bedeutung, weil Methan zum Antrieb von Gasmotoren für die Stromerzeugung und/oder Wärmegewinnung verwendet werden kann. Der Faulschlamm aus dem Faulraum 15 wird in der Regel durch geeignete Massnahmen, z. B. durch Lagerung in einem Behälter 17, entwässert, worauf er dann z. B. für landwirtschaftliche Zwecke abtransportiert werden kann.

Wie bereits erwähnt wurde, dient der Reaktor 11 der Erwärmung des frischen Klärschlamms auf eine Temperatur von > 60 °C. Bei dieser Temperatur findet eine Hydrolysierung der im Klärschlamm enthaltenen organischen Stoffe statt. Diese Hydrolysierung begünstigt die nachfolgende Faulung und Methangewinnung. Durch eine Temperaturerhöhung auf > 60 °C während etwa 12 bis 72 Stunden wird ferner eine Hygienisierung des Klärschlamms erreicht. Bei diesen Temperaturen werden nämlich Wurmeier und Enterobakteriazeen abgetötet.

Die Erwärmung des Klärschlamms im Reaktor 11 kann durch Fremdwärme erfolgen. Besonders vorteilhaft ist jedoch die Selbsterhitzung, die durch Belüftung des Reaktors 11 erfolgen kann. Durch die Belüftung werden ideale Bedingungen für die aerob-thermophilen Bakterien geschaffen, wobei deren Tätigkeit zu einer Erwärmung des Klärschlamms auf Temperaturen von 60 °C führt. Besonders günstige Verhältnisse für die thermophilen Bakterien werden durch die Belüftungsvorrichtung 19 geschaffen. Diese Belüftungsvorrichtung 19 ist mit ihrem Eingang 21 an den Oberteil des Belüftungsbehälters 11 und mit ihrem Ausgang 23 an den Unterteil des Belüftungsbehälters 11 angeschlossen. Die Umwälzpumpe 25 pumpt Klärschlamm in den Injektor 27, wo er mit Luftsauerstoff vermengt wird und dann zurück durch den Ausgang 23 in den Belüftungsbehälter fliesst.

Der in der Zeichnung dargestellte Wärmetauscher 13 weist drei konzentrische Kammern 28, 31, 33 auf. Die innere Kammer 28 dient der Aufnahme des frischen Klärschlamms aus der Kläranlage 29. Die zweite Kammer 31 kann abwechslungsweise warmen Faulschlamm aus dem Faulraum 15 und heissen Klärschlamm aus dem Reaktor 11 aufnehmen. Die dritte Kammer 33 kann mit Kühlwasser beschickt werden, um Faulschlamm aus der Kammer 15 weiter abzukühlen. Eine Umwälzpumpe 35 ist vorgesehen, um den Klärschlamm in der Kammer 28 in einem Kreislauf 37 umzuwälzen. Desgleichen ist eine Umwälzpumpe 39 vorgesehen, um Schlamm in der Kammer 31 in einem Kreislauf 41 umzuwälzen. Die Leitung 43 verbindet die Kläranlage 29 mit dem Wärmetauscher 13. Die Leitung 45 verbindet den Wärmetauscher mit dem Eingang des Reaktors 11. Die Leitung 47 verbindet den Ausgang des Reaktors 11 mit dem Wärmetauscher 13. Die Leitung 51 verbindet den Wärmetauscher mit dem Eingang des Faulraums 15. Die Leitung 53 verbindet den Ausgang des Faulraums 15 mit dem Wärmetauscher 13. Eine Leitung 55 für den Faulschlamm führt vom Wärmetauscher 13 zum Speicherbehälter 17.

Ventile 57 bis 65 sind vorgesehen, um die einzelnen Schritte des Klärschlammbehandlungsverfahrens zu steuern. Zweckmässigerweise werden diese Ventile 57 bis 65 durch eine Steuereinheit 47 automatisch gesteuert.

In Betrieb arbeitet die Vorrichtung wie folgt :

Frischer Klärschlamm aus der Kläranlage 29 wird mit der Pumpe 66 über die Leitung 43 und das offene Ventil 57 in die innere Kammer 28 des Wärmetauschers gepumpt. Gleichzeitig wird warmer Faulschlamm aus dem Faulraum 15 durch die Leitung 53 und des offene Ventil 60 in die zweite Kammer 31 eingelassen. Durch die Umwälzpumpen 35 und 39 wird dann der Schlamm in der ersten Kammer 28 und der zweiten Kammer 31 umgewälzt. Es findet dabei eine Wärmeübertragung vom warmen Faulschlamm auf den kalten Klärschlamm statt. Der frische Klärschlamm wird dabei von 10° auf etwa 17 °C erwärmt, währenddem der warme Faulschlamm von etwa 32° auf etwa 25 °C agekühlt wird. Es wird dann die Umwälzpumpe 35 abgestellt. Die Umwälzpumpe 39 läuft jedoch weiter und die dritte Kammer 33 wird über das Ventil 61 mit Kühlwasser beschickt. Dadurch wird der Faulschlamm in der Kammer 31 weiter abgekühlt. Da keine Umwälzung in der Kammer 28 stattfindet, erfolgt nur eine zu vernachlässigende Abkühlung des erwärmten Klärschlamms in der Kammer 28.

Durch Oeffnen des Ventils 64 wird gekühlter Faulschlamm mit einer Temperatur von etwa 20 °C in den Behälter 17 abgelassen. Gleichzeitig wird die Wasserkühlung durch Schliessen des Ventils 61 eingestellt.

Durch Oeffnen des Ventils 65 wird 60 °C heisser Klärschlamm aus dem Reaktor 11 in die zweite Kammer 31 eingelassen. Die Umwälzpumpen 35 und 39 werden in Betrieb gesetzt, so dass der Inhalt beider Kammern 28 und 31 umgewälzt wird. Dabei erfolgt eine weitere Erwärmung des Klärschlamms in der Kammer 28 auf ca. 36 °C. Nach dieser Erwärmung kann der in der ersten Kammer 28 durch den Faulschlamm aus dem Faulraum 15 und den behandelten Klärschlamm durch Oeffnen des Ventils 59 und Betätigen der Umwälzpumpe 35 in den Reaktor 11 gepumpt werden. Der abgekühlte vorbehandelte Klärschlamm aus der zweiten Kammer 31 wird gleichzeitig durch Betätigen der Pumpe 39 und Oeffnen des Ventils 63 dem Faulraum 15 zugeführt.

Es sind verschiedene Aenderungen der Vorrichtung möglich, ohne vom grundlegenden Prinzip der Erfindung abzuweichen. So kann beispielsweise auf die Kammer 33 verzichtet werden, wobei allerdings auf die mit dieser Kammer mögliche weitere Abkühlung des Faulschlamms verzichtet werden muss. Es ist auch möglich, eine andere Art von Wärmetauscher vorzusehen.

## Patentansprüche

1. Verfahren zum Behandeln von Klärschlamm, bei welchem Verfahren der frische Klärschlamm mit Faulschlamm vorgewärmt, durch Temperaturerhöhung in einem Reaktor (11) hygienisiert und/oder hydrolisiert und in einer oder mehreren Stufen (15) in Faulschlamm umgewandelt wird, wobei dann der Faulschlamm bei der Vorwärmung des frischen Klärschlamms abgekühlt wird, dadurch gekennzeichnet, dass mit einem mindestens zwei Kammern (28, 31) aufweisenden Wärmetauscher (13) folgende Operationen ausgeführt werden :

1. a) Frischer Klärschlamm wird in die erste Kammer (28) eingelassen und anschliessend umgewälzt,

b) gleichzeitig wird warmer Faulschlamm in die zweite Kammer (31) eingelassen und anschliessend umgewälzt,

2. gekühlter Faulschlamm wird aus der zweiten Kammer (31) abgelassen, z. B. in den Faulschlammspeicher (17)

3. a) warmer Klärschlamm aus dem Reaktor (11) wird in die zweite Kammer (31) eingelassen und anschliessend umgewälzt,

b) gleichzeitig wird der Klärschlamm in der ersten Kammer (28) weiter umgewälzt,

4. a) vorgewärmter Klärschlamm aus der ersten Kammer (28) wird dem Reaktor (11) zugeführt,

b) abgekühlter Klärschlamm aus der zweiten Kammer (31) wird dem Faulraum (15) zugeführt.

2. Verfahren nach Anspruch 1, dadurch gekennzeichnet, dass mit einem drei Kammern (28, 31, 33) aufweisenden Wärmetauscher folgende Operationen ausgeführt werden :

1. a) Frischer Klärschlamm wird in die erste Kammer (28) eingelassen und anschliessend umgewälzt,

b) gleichzeitig wird warmer Faulschlamm in die zweite Kammer (31) eingelassen und anschliessend umgewälzt,

2. a) die Umwälzung des erwärmten Klärschlamms wird eingestellt,

b) die Umwälzung des abgekühlten Faulschlamms geht weiter,

c) in die dritte Kammer (33) wird ein Kühlmedium eingebracht,

3. a) weiter abgekühlter Faulschlamm wird aus der zweiten Kammer (31) abgelassen, z. B. in den Faulschlammspeicher (17),

b) gleichzeitig wird aus der dritten Kammer (33) das Kühlmedium abgelassen oder die Zufuhr bzw. Umwälzung des Kühlmediums gestoppt,

4. a) warmer Klärschlamm aus dem Reaktor (11) wird in die zweite Kammer (31) eingelassen und anschliessend umgewälzt,

b) gleichzeitig wird der Klärschlamm in der ersten Kammer (28) umgewälzt,

5. a) in der ersten Kammer (28) vorgewärmter Klärschlamm wird dem Reaktor (11) zugeführt,

b) abgekühlter Klärschlamm aus der zweiten Kammer (31) wird dem Faulraum (15) zugeführt.

3. Verfahren nach Anspruch 1, dadurch gekennzeichnet, dass der Faulschlamm weiter mit Wasser, z. B. mit gereinigtem Abwasser, abgekühlt wird.

4. Vorrichtung zur Durchführung des Verfahrens nach einem der Ansprüche 1 bis 3, dadurch gekennzeichnet, dass ein Wärmetauscher (13) mit mindestens zwei Kammern (28, 31) vorgesehen ist, dass der Einlass der ersten Kammer (28) einen Einlass für frischen Klärschlamm darstellt, dass der Auslass der ersten Kammer (28) mittels eines Ventils (59) mit dem Einlass des Reaktors (11) verbindbar ist, dass der Einlass der zweiten Kammer (31) über Ventile (60, 65) wahlweise mit dem Auslass des Faulraums (15) und dem Auslass des Reaktors (11) verbindbar ist, dass der Auslass der zweiten Kammer (31) über Ventile (63, 64) wahlweise mit dem Einlass des Faulraums (15) bzw. des Faulschlammspeichers (17) verbindbar ist, und dass eine Umwälzpumpe (35) zum Umwälzen des frischen Kärschlamms in der ersten Kammer (28) und eine Umwälzpumpe (39) zum Umwälzen des Faulschlamms bzw. des Klärschlamms aus dem Reaktor (11) in der zweiten Kammer (31) vorgesehen ist.

5. Vorrichtung nach Anspruch 4, dadurch gekennzeichnet, dass die zweite Kammer (31) die erste Kammer (28) mindestens teilweise umschliesst.

6. Vorrichtung nach Anspruch 5, dadurch gekennzeichnet, dass eine dritte Kammer (33) vorgesehen ist, welche die zweite Kammer (31) mindestens teilweise umschliesst, um mittels eines Kühlmediums, z. B. Wasser, den Inhalt der zweiten Kammer (31) abzukühlen.

7. Vorrichtung nach einem der Ansprüche 4 bis 6, gekennzeichnet durch eine Steuereinheit (67) zur automatischen Steuerung der Ventile (57 bis 65) und Pumpen (35, 39, 66).

## Claims

1. Process for the treatment of sewage sludge, in which the fresh sewage sludge is preheated with digested sludge, pasteurised and/or hydrolysed by temperature increase in a reactor (11) and converted into digested sludge in one or more stages (15), whereupon the digested sludge is cooled on the preheating of the fresh sewage sludge, characterised in that the following operations are carried out with a heat exchanger (13) having at least two chambers :

1. a) fresh sewage sludge is fed into the first chamber (28) and then circulated,

b) concurrently, hot digested sludge is fed into the second chamber (31) and then circulated,

2. cooled digested sludge is emptied from the second chamber (31), for example, into the storage means (17) for digested sludge,

3. a) hot sewage sludge from the reactor (11) is fed into the second chamber (31) and then circulated,

b) concurrently, sewage sludge in the first chamber is further circulated,

4. a) preheated sewage sludge from the first chamber (28) is fed into the reactor (11),

b) cooled sewage sludge from the second chamber (31) is fed to the digestion chamber (15).

2. Process according to claim 1, characterised in that the following operations are carried out with a heat exchanger having three chambers (28, 31, 33):

1. a) fresh sewage sludge is fed into the first chamber (28) and then circulated,

b) concurrently, hot digested sludge is fed into the second chamber (31) and then circulated,

2. a) the circulation of the heated sewage sludge is stopped,

b) the circulation of the cooled digested sludge is continued

c) a cooling fluid is fed into the third chamber (33),

3. a) further cooled digested sludge is emptied from the second chamber (31), for example, into storage means (17) for the digested sludge,

b) concurrently, the cooling fluid is emptied from the third chamber (33) or the feeding or the circulation of the cooling fluid is stopped,

4. a) hot sewage sludge from the reactor (11) is fed into the second chamber (31) and then put into circulation,

b) concurrently, the sewage sludge in the first chamber (28) is circulated,

5. a) preheated sewage sludge from the first chamber (28) is fed to the reactor (11),

b) cooled sewage sludge from the second chamber (31) is fed to the digestion chamber (15).

3. Process according to claim 1, characterised in that the digested sludge is further cooled with water, for example treated sewage effluents.

4. Apparatus for carrying out the process according to one of the claims 1 to 3, characterised in that a heat exchanger (13) with at least two chambers (28, 31) is provided, that the inlet of the first chamber (28) is an inlet for fresh sewage sludge, that the outlet of the first chamber (28) can be connected by a valve (59) to the inlet of the reactor (11) that the inlet of the second chamber (31) can selectively be connected by valves (60, 65) to the outlet of the digestion chamber (15) and to the outlet of the reactor (11), that the outlet of the second chamber (31) can selectively be connected by valves (63, 64) with the inlet of the digestion chamber (15) or the storage means (17) for the digested sludge, respectively, and that a circulating pump (39) for circulating the digested sludge or the sewage sludge from the reactor (11) in the second chamber (31) is provided.

5. Apparatus according to claim 4, characterised in that the second chamber (31) encloses at least partly the first chamber (28).

6. Apparatus according to claim 5, characterised in that a third chamber (33) is provided, said third chamber enclosing at least partly the second chamber (31) for cooling by a cooling fluid, for instance water, the contents of the second chamber (31).

7. Apparatus according to one of the claims 4 to 6, characterised by a control unit (67) for automatic control of the valves (57 to 65) and pumps (35, 39, 66).

## Revendications

1. Procédé de traitement de boues résiduaires, dans lequel la boue résiduaire fraîche est pré-chauffée avec de la boue digérée, hygiénisée et/ou hydrolysée par élévation de la température dans un réacteur (11) et convertie en boue digérée dans un ou plusieurs étages (15), la boue digérée étant ensuite refroidie avec le pré-chauffage de la boue résiduaire fraîche, caractérisé en ce que les opérations suivantes sont conduites avec un échangeur de chaleur (13) qui comporte au moins deux chambres (28, 31):

1. a) de la boue résiduaire fraîche est introduite dans la première chambre (28), puis mise en circulation,

b) en même temps, de la boue digérée chaude est introduite dans la deuxième chambre (31), puis mise en circulation,

2. de la boue digérée refroidie est évacuée de la deuxième chambre (31), par exemple dans le réservoir de boue digérée (17),

3. a) de la boue résiduaire chaude provenant du réacteur (11) est introduite dans la deuxième chambre (31), puis mise en circulation,

b) en même temps, la boue résiduaire dans la première chambre (28) est maintenue en circulation,

4. a) de la boue résiduaire pré-chauffée provenant de la première chambre (26) est envoyée dans le réacteur (11),

b) de la boue résiduaire refroidie, provenant de la deuxième chambre (31) est envoyée dans la chambre de putréfaction (15).

2. Procédé selon la revendication 1, caractérisé en ce que les opérations suivantes sont conduites avec un échangeur de chaleur comportant trois chambres (28, 31, 33):

1. a) de la boue résiduaire fraîche est introduite dans la première chambre (28), puis mise en circulation,

b) en même temps, de la boue digérée chaude est introduite dans la deuxième chambre (31), puis mise en circulation,

2. a) la circulation de la boue résiduaire chauffée est arrêtée,

b) la circulation de la boue digérée refroidie est poursuivie,

c) un fluide de refroidissement est chargé dans la troisième chambre (33),

3. a) de la boue digérée refroidie davantage est évacuée de la deuxième chambre (31), par exemple dans le réservoir de boue digérée (17),

b) en même temps, le fluide de refroidissement est évacué de la troisième chambre (33) ou l'arrivée ou circulation du fluide de refroidissement est arrêtée,

4. a) de la boue résiduaire chaude provenant du réacteur (11) est introduite dans la deuxième chambre (31), puis mise en circulation,

b) en même temps, la boue résiduaire dans la première chambre (28) est mise en circulation,

5. a) de la boue résiduaire pré-chauffée dans la première chambre (28) est envoyée dans le réacteur (11),

b) de la boue résiduaire refroidie provenant de la deuxième chambre (31) est envoyée dans la chambre de putréfaction (15).

3. Procédé selon la revendication 1, caractérisé en ce que la boue digérée est refroidie davantage avec de l'eau, par exemple avec de l'eau résiduaire épurée.

4. Dispositif pour l'exécution du procédé selon l'une quelconque des revendications 1 à 3, caractérisé en ce qu'il est prévu un échangeur de chaleur (13) comportant au moins deux chambres (28, 31), en ce que l'admission de la première chambre (28) est une admission pour de la boue résiduaire fraîche, en ce que la sortie de la première chambre (28) peut être raccordée, au moyen d'une valve (59), à l'admission du réacteur (11), en ce que l'admission de la deuxième chambre (31) peut être raccordée au choix, au moyen de valves (60, 65), à la sortie de la chambre de digestion (15) et à la sortie du réacteur (11), en ce que la sortie de la deuxième chambre (31) peut être raccordée au choix, au moyen de valves (63, 64), à l'admission de la chambre de digestion (15) et du réservoir de boue digérée (17), et en ce qu'il est prévu une pompe de circulation (35) pour la mise en circulation de la boue résiduaire fraîche dans la première chambre (28) et une pompe de circulation (39) pour la mise en circulation de la boue digérée ou de la boue résiduaire provenant du réacteur dans la deuxième chambre (31).

5. Dispositif selon la revendication 4, caractérisé en ce que la deuxième chambre (31) entoure au moins partiellement la première chambre (28).

6. Dispositif selon la revendication 5, caractérisé en ce qu'il est prévu une troisième chambre (33) qui entoure au moins partiellement la deuxième chambre (31) afin de refroidir le contenu de la deuxième chambre (31) au moyen d'un fluide de refroidissement, par exemple de l'eau.

7. Dispositif selon l'une quelconque des revendications 4 à 6, caractérisé par une unité de commande (67) pour la commande automatique des valves (57 à 65) et des pompes (35, 39 66).

EP 0 179 234 B1